(19) Europäisches Patentamt
European Patent Office
Office européen des brevets

(11) **EP 2 618 269 A1**

(12) # EUROPEAN PATENT APPLICATION

(43) Date of publication:
**24.07.2013 Bulletin 2013/30**

(51) Int Cl.:
***G06F 17/14*** *(2006.01)*

(21) Application number: **12151399.8**

(22) Date of filing: **17.01.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Siemens Aktiengesellschaft**
**80333 München (DE)**

(72) Inventors:
- **Kozionov, Alexey**
  **180005 Pskov (RU)**
- **Pyayt, Alexander**
  **198207 St. Petersburg (RU)**
- **Mokhov, Ilya**
  **192281 St. Petersburg (RU)**

(54) **A method for processing of measurements from several sensors**

(57) The invention refers to a method for processing of measurements (ml, m2, m3) from several sensors (Sl, S2, S3), where the measurements for each sensor (Sl, S2, S3) represent a data vector comprising a time series of subsequent measured signals (ml, m2, m3) obtained with a sampling rate (fl, f2, f3) specific from each sensor (Sl, S2, S3). The data vector for each sensor (Sl, S2, S3) is subjected to a discrete wavelet transform (DWT) including a wavelet filter (h) and a scaling filter (g) which are based on a scaling function (ϕ) and a wavelet function (ψ), resulting in a number of wavelet coefficients comprising approximation coefficients ( $a_k^1$, $a_k^2$, $a_k^3$ ) and detail coefficients ( $d_k^1$, $d_k^2$, $d_k^3$ ) for a predetermined number of levels (L1, L2, L3). The wavelet coefficients for each sensor (Sl, S2, S3) are subjected to a thresholding operation (TR), discarding coefficients not fulfilling a threshold criterion, resulting in a reduced number of coefficients. The data vector for each sensor (Sl, S2, S3) is reconstructed by the inverse of the discrete wavelet transform (IWT) using the reduced number of coefficients. The reconstructed data vector for each sensor (Sl, S2, S3) is interpolated based on the scaling function (ϕ) of the discrete wavelet transform (WT). Eventually, a new data vector for each sensor (Sl, S2, S3) is determined by sampling the interpolated reconstructed data vector for each sensor at time points which are the same for all sensors (Sl, S2, S3), resulting in a multivariate vector (M) of measured signals of all sensors (Sl, S2, S3) for each sampled time point.

FIG 1

S1, f1
S2, f1
S3, f2
PR
m1
m2
m3
M
Δ1
Δ2
Δ3

EP 2 618 269 A1

Printed by Jouve, 75001 PARIS (FR)

**Description**

The invention refers to a method for processing of measurements from several sensors as well as to a corresponding apparatus. Furthermore, the invention refers to a computer program product and a computer program.

When processing the measurements of several sensors, the measured signals of each sensor are usually determined at different time points and with different sampling frequencies taking into account that signal's rate of each sensor is stable. However, in order to analyse the sensor signals based on a multidimensional data analysis, multivariate vectors representing the measured signals of all sensors at the same time points are required. Furthermore, when processing signals from a large number of sensors, there is a need to compress the signals. Moreover, as sensor signals are subjected to noise, it is desirable to denoise the measured signals.

According to the prior art, sensor measurements can be interpolated in order to obtain sensor signals at time points for which a measured signal is not available. Also methods for denoising and data compression, e.g. wavelet-based methods, are known. However, the combination of different prior art techniques results in a complex data processing increasing the computation complexity.

Therefore, it is an object of the invention to provide an easy method for processing of measurements from several sensors resulting in a compressed and denoised multivariate vector of sensor signals.

This object is solved by the independent claims. Preferred embodiments of the invention are defined in the dependent claims.

The method of the invention processes measurements from several sensors, where the measurements from each sensor represent a data vector comprising a time series of subsequent measured signals obtained with a sampling rate specific for each sensor. This sampling rate is usually constant but may also vary during the measurements.

In a step a) of the inventive method, the data vector for each sensor is subjected to a discrete wavelet transform including a wavelet filter and a scaling filter (also designated as high-pass filter and low-pass filter) which are based on a scaling function and a wavelet function, resulting in a number of wavelet coefficients comprising approximation coefficients and detail coefficients for a predetermined number of levels. Discrete wavelet transforms are known per se from the prior art so that the above terminology is known for a skilled person. Depending on the circumstances, the wavelet transform may be based on the Haar wavelet or on the Daubechies wavelet or on any other wavelet.

In a step b), the wavelet coefficients for each sensor obtained in step a) are subjected to a thresholding operation, discarding coefficients not filling a threshold criterion, resulting in a reduced number of coefficients. Thresholding techniques are known per se in the prior art and e.g. described in document [1]. In a preferred embodiment, wavelet coefficients having an absolute value smaller than a given threshold are discarded in the thresholding operation.

In a step c), the data vector for each sensor is reconstructed by the inverse of the discrete wavelet transform using the reduced number of coefficients. Thereafter, the reconstructed data vector for each sensor is interpolated in step d) based on the scaling function of the discrete wavelet transform. Such an interpolation is per se known in the prior art. Particularly, in case that the scaling function is not known analytically, corresponding approximations based on the filters of the discrete wavelet transform may be used in order to perform the interpolation step d). A description of an interpolation based on a scaling function of a discrete wavelet transform can be found in document [1] (see particularly section 7.6).

After having obtained the interpolated reconstructed data vector, a new data vector for each sensor is determined in step e) by sampling the interpolated reconstructed data vector for each sensor at time points which are the same for all sensors. As a result, a multivariate vector of measured signals of all sensors for each sampled time point is obtained. This vector may then be subjected to appropriate multivariate data analysis methods, e.g. neural networks, in order to extract relevant information from the sensor measurements.

The method according to the invention is based on the realization that a single wavelet transform can be used in order to perform a thresholding as well as an interpolation so that a compressed and denoised multivariate vector can be determined. The invention has the advantage that appropriate denoised and compressed multivariate vectors of measured signals can be obtained with low computation complexity.

The method of the invention can be performed in an offline process decoupled from the operation of the sensors. In this offline method, the signals previously measured by the sensors are stored in an offline database for processing by the inventive method. However, in a preferred embodiment, the method of the invention is performed during the operation of the sensors where additional wavelet coefficients comprising additional approximation coefficients and detail coefficients for the predetermined number of levels are calculated for each sensor after obtaining a number of new measured signals for the respective sensor, thus resulting in a new number of coefficients for which the above steps b) to e) are performed so that an updated multivariate vector of signals of all sensors is determined.

In a particularly preferred embodiment, the additional wavelet coefficients are calculated by a convolution operation using the scaling filter and the wavelet filter of the discrete wavelet transform.

Preferably, for a new measured signal $x_{N+1}$ obtained after N measured signals and for k approximation coefficients and k detail coefficients at the first level of the predetermined number of levels, additional approximation coefficients $a_{k+i}^{1}$ and additional detail coefficient $d_{k+i}^{1}$ at the first level of the discrete wavelet transform are calculated by the following convolutions:

$$a_{k+i}^{1} = \left(g * x_{N+i-l+i:N+1}\right),$$

$$d_{k+i}^{1} = \left(h * x_{N+i-l+1:N+1}\right),$$

where g is the scaling filter and h is the wavelet filter;
where i = 1, ..., l-1, where l is the filter length for g and h;
where $x_{N+i-l+1:N+1}$ represents the measured signals at and between time points N+i-l+1 and N+1.

In a preferred variant of the above embodiment, wavelet coefficients for odd time steps N+1, N+3 and so on are rejected. The rejected coefficients are not necessary in order to perform the wavelet transform in higher levels. This variant of the invention saves computational power and storage space.

In another embodiment of the invention, for a new measured signal $x_{N+1}$ obtained after N measured signals and for k approximation coefficients and k detail coefficients at a higher level j above the first level of the predetermined number of levels, additional approximation coefficients $a_{k+i}^{j}$ and additional detail coefficient $d_{k+i}^{j}$ at said higher level j are calculated by the following convolutions:

$$a_{k+i}^{j} = \left(g * a_{N+i-l+1:N+i}^{j-1}\right)\downarrow 2$$

$$d_{k+i}^{j} = \left(h * a_{N+i-l+1:N+i}^{j-1}\right)\downarrow 2$$

where g is the scaling filter and h is the wavelet filter;
where i refers to the wavelet coefficients of the previous level j-1 which have not been rejected;
where 1 is the filter length for g and h;
where $a_{N+i-l+1:N+i}^{j-1}$ represents the approximation coefficients at level j-1 at and between time points N+i-l+1 and N+1;
where the symbol ↓2 represents a sub-sampling of each second coefficient in the level j.

Due to the process of sub-sampling, computational power and storage space is saved.

In another embodiment of the invention, the length of the data vector is greater than the length of the wavelet function in the last level of the predetermined number of levels. This embodiment minimizes the number of boundary coefficients in the discrete wavelet transform.

The method of the invention can be used for arbitrary measured signals of corresponding sensors with stable signal's rate. E.g., the measured signals may refer to vibration parameters measured by one or more vibration sensors and/or water level parameters measured by one or more water level sensors and/or temperature values measured by one or more temperature sensors and so on.

In a particularly preferred embodiment, the sensors are installed for monitoring of the same technical system so that an appropriate data analysis for this technical system can be performed using the multivariate vectors determined by the method of the invention. In one embodiment, the technical system refers to a dam where preferably the level of water of the dam and the vibration in the dam are monitored by corresponding sensors.

Besides the above method, the invention also refers to an apparatus for processing of measurements from several sensors, where the measurements from each sensor represent a data vector comprising a time series of subsequent measured signals obtained with a sampling rate specific for each sensor. The apparatus includes a computing means for performing the above described method of the invention or one or more preferred embodiments of the above described method of the invention.

The invention also refers to a computer program product directly loadable into the internal memory of a digital computer, comprising software code portions for performing the method of the invention or one or more preferred embodiments of the method of the invention.

Furthermore, the invention also comprises a computer program for controlling a computer to perform a method of the invention or one or more preferred embodiments of the method according to the invention.

Embodiments of the invention will now be described with respect to the accompanying drawings wherein:

Fig. 1 shows a measurement process based on several sensors where the measured signals are processed according to an embodiment of the invention;

Fig. 2 illustrates a discrete wavelet transform used in the method according to the invention;

Fig. 3 shows an offline algorithm for processing measured signals according to a first embodiment of the invention;

Fig. 4 shows an online algorithm for processing measured signals according to a second embodiment of the invention; and

Fig. 5 shows the process of rejecting wavelet coefficients according to the second embodiment of the invention.

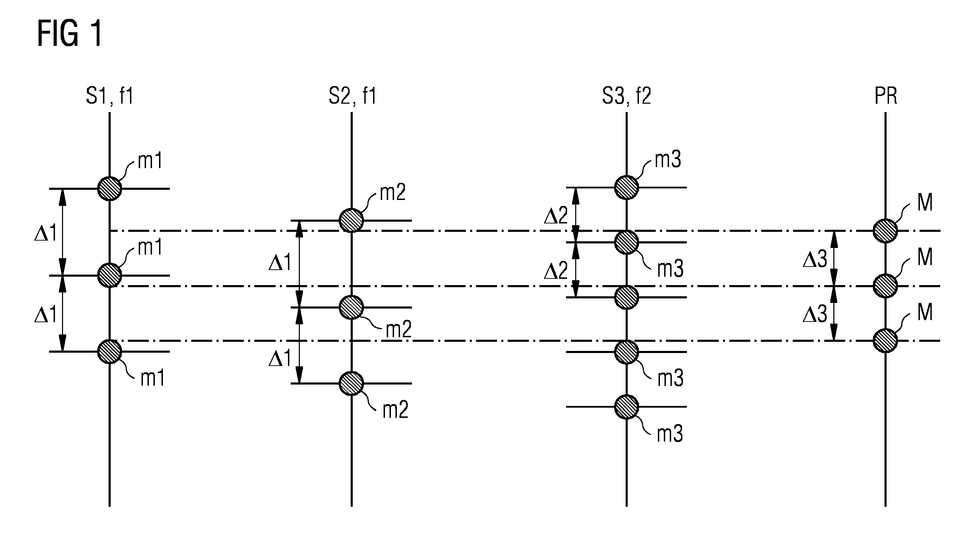

Fig. 1 shows a scenario in which several sensors S1, S2, S3 measure signals with specific sampling rates where the measured signals are processed according to the invention. The vertical lines refer to measurements of the respective sensors S1, S2, S3, where measured signals ml, m2, m3 are obtained after corresponding time intervals, thus resulting in a sampling rate. For the sensor S1, the sampling rate is f1 such that the time interval between measured signals m1 is $\Delta 1$. The sensor S2 has the same sampling frequency f1 as the sensor S1. However, the measured signals m2 are obtained at other time points than the signals m1 of sensor S1. The sensor S3 uses a different sampling frequency f2 resulting in smaller intervals $\Delta 2$ between measured signals m3. According to the invention as described in the following, a multivariate, i.e. multidimensional, vector at predetermined time steps is calculated, where each vector includes measured signals for all sensors at the corresponding time step. This is indicated in line PR, referring to the processing result of the invention. In the scenario as shown in Fig. 1, corresponding multivariate vectors M are obtained at three time points though there are no signals available from any sensor at the respective time points.

In the embodiment shown in Fig. 1, each sensor is installed at the same technical system but measures different signals. E.g., sensor S1 may refer to a vibration sensor, sensor S2 to a water level sensor and sensor S3 to a temperature sensor installed at a dam. In order to perform a multivariate data analysis, it is necessary that the signals of all sensors are available at the same time points. This is achieved by the processing PR in Fig. 1 resulting in multidimensional vectors M. Based on those vectors, appropriate data analysis methods, e.g. for predicting the future behaviour of the technical system, may be performed. As an example, a neural network may be trained by known sensor data. Based on this network, the multidimensional vectors obtained during the operation of the technical system are used in order to forecast the behaviour of the technical system. If a dangerous operation condition is detected by the neural network, a corresponding alarm may be generated. E.g., it may be detected that there is the risk that a dam will break and, as a consequence, appropriate measures, e.g. a reduction of the water level, may be initiated.

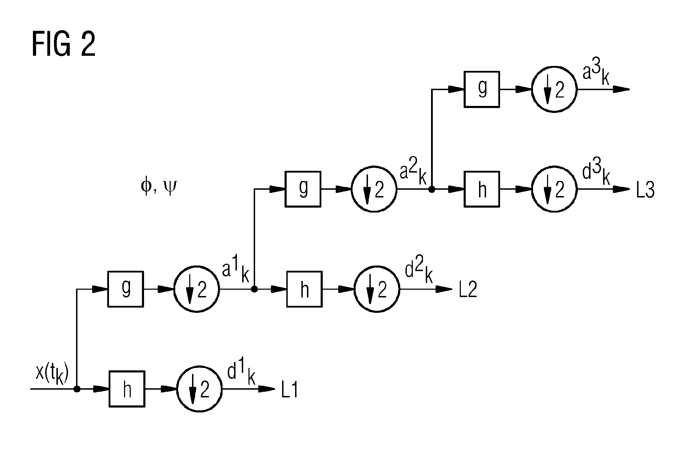

In the processing according to the invention, a discrete wavelet transform is used in order to denoise the signals of the sensors and to interpolate the measured signals such that at the same timestamps measured signals for all sensors are obtained. The theory of discrete wavelet transform is well-known in the art. Particularly, documents [1] and [2] provide a detailed description about wavelet transforms. The discrete wavelet transform according to the invention is applied to the time series of measured signals for each sensor independently. The transform for the measured signals for one sensor is shown in Fig. 2. In this figure, $\boldsymbol{x(t_k)}$ indicates the measured signal at timestamps $\boldsymbol{t_k}$, where k = 1, 2, ..., N and $\boldsymbol{h=t_{k+1}-t_k=const}$ represents the stable sampling rate. To obtain a multidimensional vector, it is necessary to know the signal $\boldsymbol{x(t)}$ at an arbitrary timestamp $\boldsymbol{t} \in [\boldsymbol{t_{\min}},\boldsymbol{t_{\max}}]$, where $\boldsymbol{t_{\min}}$ and $\boldsymbol{t_{\max}}$ are boundaries of timestamp arrays.

To obtain such a vector, at first the discrete wavelet transform shown in Fig. 2 is performed for each sensor. The discrete wavelet transform is represented by a scaling filter g and a wavelet filter h where said filters are based on a corresponding scaling function $\phi$ and a corresponding wavelet function $\psi$. In the method of the invention, any known discrete wavelet transform may be used. E.g., the well-known Haar wavelet can be implemented where the scaling function has the constant value of 1 in the interval between 0 and 1 and where the wavelet function takes the value 1 and -1 on [0, 1/2] and [1/2, 1], respectively. However, in a preferred embodiment, the well-known Daubechies wavelet is used for the discrete wavelet transform.

The wavelet transform of Fig. 2 is well-known and based on a decomposition in several levels. In Fig. 2, three levels L1, L2 and L3 are shown. However, the number of levels can be different depending on the number of measured signals to which the transform is applied. As mentioned before, the transform is based on a scaling function $\phi$ and a wavelet function $\psi$. Based on these functions, a corresponding scaling filter g and wavelet filter h are defined. The scaling filter g is a low-pass filter and the wavelet filter h is a high-pass filter. The scaling filter g generates so-called approximation coefficients $a_k^j$ and the wavelet filter h generates so-called detail coefficients $d_k^j$, where j corresponds to the number of the level. The detail coefficients and approximation coefficients in one level are derived from the approximation coefficients in the previous levels. The wavelet transform can be represented as follows:

$$d_k^j = \left(a_k^{j-1} * h\right) \downarrow 2, \quad a_k^j = \left(a_k^{j-1} * g\right) \downarrow 2 \qquad (1).$$

The symbol ↓2 represents sub-sampling by two, rejecting coefficients corresponding to odd values. For level L1, the wavelet filter g and the scaling filter h are applied to the measured signals $x(t_k)$. The above wavelet transform is known from the prior art and a description thereof can be found e.g. in document [1].

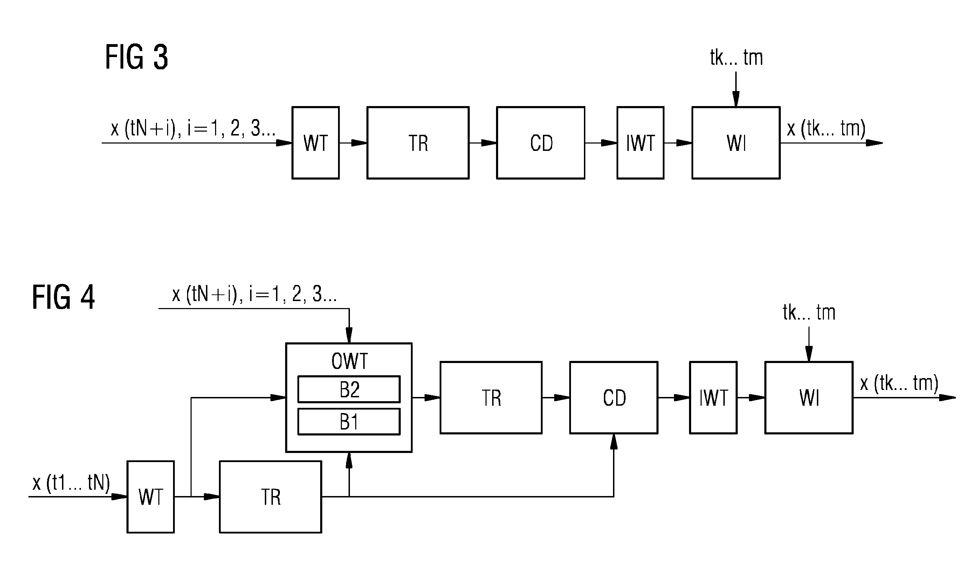

Fig. 3 shows the steps of the invention applied to measured signals in an offline algorithm where the discrete wavelet transform is applied to a set of measured signals stored in a database. The method begins with the discrete wavelet transform WT which has been described in the foregoing. The input of this transform are corresponding vectors $\boldsymbol{x(t_{N+i})}$ measured at a specific sampling rate for each sensor. The output of the discrete wavelet transform are the above mentioned detail coefficients and approximation coefficients. In order to denoise and compress the signal, a thresholding TR is applied to the coefficients. This thresholding process is known per se from the prior art. A description thereof can be found in document [1], section 10.2.4. The coefficients of the discrete wavelet transform are centered around 0 and significant information is stored in a few large coefficients. The other coefficients correspond to noise and small signal fluctuations. According to the thresholding TR, small coefficients are suppressed. I.e., coefficients having an absolute value smaller than a given threshold are discarded from the coefficients of the wavelet transform. This provides a compression ratio of roughly $\mathbf{2 \times \mathit{M/N}}$, where M corresponds to the number of coefficients after compression and N is the initial signal length. The factor of 2 is for storing both the coefficient value and the index thereof. Different thresholding techniques may be used in the step TR. Particularly, so-called hard wavelet thresholding or soft wavelet thresholding may be applied.

According to the embodiment shown in Fig. 3, a coefficient database CD including a reduced number of coefficients is obtained after the thresholding operation TR. In a next step, the coefficients in this database are subjected to the inverse IWT of the wavelet transform WT, resulting in a reconstructed time series of measured signals for each sensor. In a subsequent step, a so-called wavelet interpolation WI based on the scaling function $\phi(\boldsymbol{t})$ of the wavelet transform WT is applied to the reconstructed signals $\boldsymbol{x(t_k)}$. This results in an interpolated series of measured values which is represented by the following formula:

$$x(t) = \sum_{-\infty}^{+\infty} x(t_k)\phi(t - t_k) \qquad (2).$$

Depending on the type of wavelets, there may be no analytical representation of the scaling function $\phi$. However, there are well-known approximation techniques in order to determine the above interpolated signal $\boldsymbol{x(t)}$ (see document [2], chapter 7.6). Based on the wavelet interpolation WI, a multivariate vector of measured signals for all sensors can be determined at sampled time points $t_k, ..., t_M$. To do so, the signal for each sensor is determined at the sampled time points based on the above interpolated function $\boldsymbol{x(t)}$. As a result, corresponding measured signals $\boldsymbol{x(t_k,...,t_M)}$ are obtained for the sampled time points.

The above described offline algorithm for determining multivariate vectors of measured signals may be combined with an online discrete wavelet transform, resulting in an online algorithm for updating the wavelet transform based on measured signals obtained during the operation of the sensors. This online algorithm is shown in Fig. 4. The algorithm is based on the assumption that initially a number of measured signals for each sensor is available. Those measured signals are indicated as $\boldsymbol{x(t_1,...,t_N)}$ in Fig. 4. For those signals, the above described discrete wavelet transform WT is applied followed by the thresholding procedure TR, resulting in a reduced number of coefficients which are stored in the coefficient database CD analogously to the offline algorithm shown in Fig. 3. According to Fig. 4, new measurements are taken in the operation of the sensors. Those measurements are indicated as $\boldsymbol{x(t_{N+i})}$ in Fig. 4. Based on those measurements, an online discrete wavelet transform OWT is performed in order to obtain additional wavelet coefficients. The online wavelet transform will be described in the following.

There is the initial signal $\boldsymbol{x(t_1,...,t_N)}$ of length N and its initial discrete wavelet transform WT. The length of the scaling filter g and of the wavelet filter h is 1. This length indicates the number of coefficients used for filtering. At the boundaries of the wavelet coefficient vectors at each level of decomposition, there are boundary coefficients (see also document [1]). Those boundary coefficients which are needed to perform the inverse wavelet transform are preserved in a boundary coefficient buffer which is indicated as B1 in Fig. 4.

Suppose a new measured signal $\boldsymbol{x_{N+1}=x(t_{N+1})}$ is received and there are k wavelet coefficients (without accounting of boundary coefficients) at the first level L1 of decomposition. In this case, $\boldsymbol{k=N/2}$ if N is even and $\boldsymbol{k=(N-1)/2}$ if N is odd. Additional approximation and wavelet coefficients at this level L1 are calculated using the last l-1 measured signals as well as the wavelet filter h and the scaling filter g of the discrete wavelet transform WT. I.e., a new approximation coefficient $a_{k+1}^{1}$ and a new wavelet coefficient $d_{k+1}^{1}$ are calculated as follows:

$$a_{k+1}^{1} = \left(g * x_{N+1-l+1:N+1}\right), \quad d_{k+1}^{1} = \left(h * x_{N+1-l+1:N+1}\right) \qquad (3).$$

In the above formula, $\boldsymbol{x_{N+1-l+1:N+1}}$ represents the measured signals at and between the time points N+1-l+1 and N+1.

In order to calculate corresponding boundary coefficients which are needed for the inverse wavelet transform, the measured signals $\boldsymbol{x_{N+2:N+l+1}}$ corresponding to the signals at and between the time points N+2 and N+l+1 are needed. Those signals are obtained using standard wavelet technique "reflection", i.e. by the following assignment: $\boldsymbol{x_{N+2:N+l+1}=x_{N+1:N+2-l}}$. This results in the calculation of the boundary coefficients at the first level as follows:

$$a_{k+i}^{1} = \left(g * x_{N+i-l+1:N+i}\right), \quad d_{k+i}^{1} = \left(h, x_{N+i-l+1:N+i}\right) \qquad (4),$$

where i = 2:1-1.

For the calculation of these coefficients, l-1 previous "noisy" measured signals must be preserved in a buffer (e.g. buffer B2 in Fig. 4). For levels higher than the first decomposition level, the calculation of the corresponding wavelet coefficients and approximation coefficients can be done as follows:

$$a_{k+i}^{j} = \left(g * a_{N+i-l+1:N+i}^{j-1}\right)\downarrow 2, \quad d_{k+i}^{j} = \left(h * a_{N+i-l+1:N+ii}^{j-1}\right)\downarrow 2 \qquad (5).$$

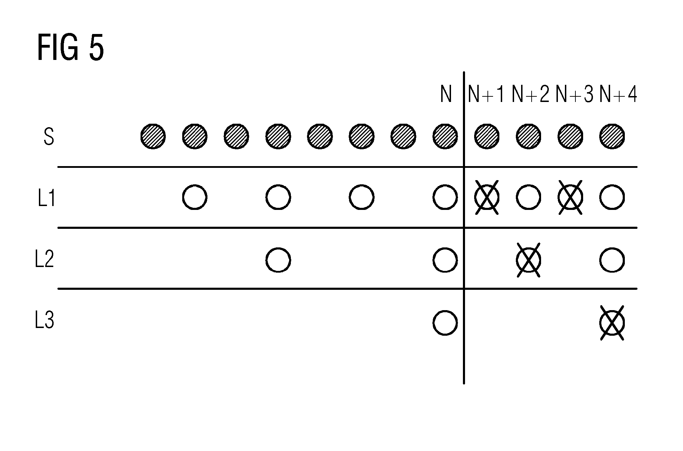

$a_{N+i-l+1:N+i}^{j-1}$ represents the approximation coefficients at level j-1 at and between the time points N+i-l+1 and N+i. N corresponds to the length of the coefficient vector at the previous level of decomposition, 1 represents the wavelet and scaling filter length, k corresponds to the number of wavelet coefficient. If $\boldsymbol{i>1}$, $\boldsymbol{a_{k+i}}$ and $\boldsymbol{d_{k+i}}$ correspond to boundary coefficients. ↓2 represents sub-sampling by rejecting calculated coefficients corresponding to an even number. This sub-sampling is illustrated in Fig. 5. In this figure, the black circles in line S represent measured signals at subsequent time points, where the time points $t_N$, $t_{N+1}$ and so on are indicated by N, N+1 and so on. The lines L1, L2 and L3 represent corresponding levels of decomposition. The circles in each line indicate the wavelet coefficients which are determined. Moreover, those coefficients which are rejected in each level are indicated by a cross laid over the corresponding circles.

For the calculation of the wavelet coefficients at the level j, l-1 "noisy" approximation coefficients at level j-1 must be preserved. To do so, those coefficients are stored in the buffer B2 of Fig. 4. As mentioned above, boundary coefficients can be preserved in the boundary coefficient buffer BI. Commonly used wavelet filters have a length of l = 4 or l = 8. Hence, the boundary coefficient buffer B1 and the approximation coefficient buffer B2 do not take much storage space.

After having performed the above described online wavelet transform resulting in new approximation and detail coefficients, once again a denoising and compression by thresholding TR is performed. This results in a reduced number of coefficients which are stored in the coefficient database CD. This database is the result of a wavelet transform considering both the initial measured signals x ($t_1$, ..., $t_N$) as well as new measured signals x($t_{N+i}$). Analogously to the offline algorithm shown in Fig. 3, an inverse IWT of the discrete wavelet transform WT is applied to the coefficient database CD in Fig. 4. Furthermore, the above described wavelet interpolation WI is applied to the reconstructed signal resulting from the inverse wavelet transform IWT. This interpolated signal is then used in order to determine a multivariate vector including measured signals $x(t_k, ..., t_m)$ for all sensors at desired sampled time points $t_k, ..., t_m$.

In order to minimize the number of boundary coefficients in the initial wavelet transform WT, the length of the signal must be more than the length of the wavelet function L(j) at the last level of decomposition. The length of this wavelet function can be calculated with the following formula (see also document [2]):

$$L(j) = (2^j - 1)(l - 1) + 1 \qquad (6),$$

where 1 is the wavelet and scaling filter length and j corresponds to the level of wavelet decomposition.

The above described embodiments of the invention have several advantages. There is the possibility to process measurements of sensors from an offline database as described with respect to Fig. 3. However, also new measurements can be added to the database in an online manner as described with respect to Fig. 4. In this embodiment, a combined online compression and denoising with a reduced number of online calculations is performed. The method of the invention enables to extract important features from time series of measured signals which allow filtering data in the frequency domain and compressing data simultaneously. This is done by using a wavelet transform resulting in coefficients which can be compressed in time-frequency domain with features preserving. The invention can be used as one step before or during a multivariate data analysis because the invention provides for each time step multidimensional data from all sensors. According to the invention, only one wavelet transform is used for denoising, compression, interpolation instead of applying different methods for those different stages.

List of references:

[1] S. Mallat (1999), "A Wavelet Tour of Signal Processing", 2nd Edition, Academic Press.

[2] Percival DB, Walden AT (2000), "Wavelet methods for time series analysis", Cambridge (UK): Cambridge University Press.

## Claims

**1.** A method for processing of measurements (ml, m2, m3) from several sensors (Sl, S2, S3), where the measurements from each sensor (Sl, S2, S3) represent a data vector comprising a time series of subsequent measured signals (ml, m2, m3) obtained with a sampling rate (fl, f2, f3) specific for each sensor (Sl, S2, S3), wherein

a) the data vector for each sensor (Sl, S2, S3) is subjected to a discrete wavelet transform (WT) including a wavelet filter (h) and a scaling filter (g) which are based on a scaling function ($\phi$) and a wavelet function ($\psi$), resulting in a number of wavelet coefficients comprising approximation coefficients ($a_k^1, a_k^2, a_k^3$) and detail coefficients ($d_k^1, d_k^2, d_k^3$) for a predetermined number of levels (L1, L2, L3);

b) the wavelet coefficients for each sensor (Sl, S2, S3) are subjected to a thresholding operation (TR), discarding coefficients not fulfilling a threshold criterion, resulting in a reduced number of coefficients;

c) the data vector for each sensor (Sl, S2, S3) is reconstructed by the inverse of the discrete wavelet transform (IWT) using the reduced number of coefficients;

d) the reconstructed data vector for each sensor (Sl, S2, S3) is interpolated based on the scaling function ($\phi$) of the discrete wavelet transform (WT);

e) a new data vector for each sensor (Sl, S2, S3) is determined by sampling the interpolated reconstructed data vector for each sensor at time points which are the same for all sensors (Sl, S2, S3), resulting in a multivariate vector (M) of measured signals of all sensors (Sl, S2, S3) for each sampled time point.

**2.** The method according to claim 1, wherein the discrete wavelet transform (WT) is based on the Haar wavelet or the Daubechies wavelet.

**3.** The method according to claim 1 or 2, wherein the method is performed during the operation of the sensors (Sl, S2, S3) where additional wavelet coefficients comprising additional approximation coefficients and detail coefficients for the predetermined number of levels (L1, L2, L3) are calculated for each sensor (Sl, S2, S3) after obtaining a number of new measured signals (ml, m2, m3) for the respective sensor (Sl, S2, S3), thus resulting in a new number of coefficients for which steps b) to e) are performed.

**4.** The method according to claim 3, wherein the additional wavelet coefficients are calculated by a convolution operation using the scaling filter (g) and the wavelet filter (h) of the discrete wavelet transform.

**5.** The method according to claim 4, wherein for a new measured signal $x_{N+1}$ obtained after N measured signals and for k approximation coefficients ( $a_k^1$ ) and k detail coefficients ( $d_k^1$ ) at the first level (L1) of the predetermined number of levels (L1, L2, L3), additional approximation coefficients $a_{k+i}^1$ and additional detail coefficient $d_{k+i}^1$ at the first level (L1) are calculated by the following convolutions:

$$a_{k+i}^1 = \left(g * x_{N+i-l+i:N+1}\right),$$

$$d_{k+i}^1 = \left(h * x_{N+i-l+1:N+1}\right),$$

where g is the scaling filter and h is the wavelet filter;
where i = 1, ..., l-1, where 1 is the filter length for g and h;
where $X_{N+i-l+1:N+1}$ represents the measured signals at and between time points N+i-l+1 and N+1.

**6.** The method according to claim 5, wherein wavelet coefficients for odd time steps N+1, N+3 and so on are rejected.

**7.** The method according to claim 5 or 6, wherein for a new measured signal $x_{N+1}$ obtained after N measured signals and for k approximation coefficients and k detail coefficients at a higher level j above the first level of the predetermined number of levels (L1, L2, L3), additional approximation coefficients $a_{k+i}^j$ and additional detail coefficient $d_{k+i}^j$ at said higher level j are calculated by the following convolutions:

$$a_{k+i}^j = \left(g * a_{N+i-l+1:N+i}^{j-1}\right) \downarrow 2$$

$$d_{k+i}^j = \left(h * a_{N+i-l+1:N+i}^{j-1}\right) \downarrow 2$$

where g is the scaling filter and h is the wavelet filter;
where i refers to the wavelet coefficients of the previous level j-1 which have not been rejected;
where 1 is the filter length for g and h;
where $a_{N+i-l+1:N+i}^{j-1}$ represents the approximation coefficients at level j-1 at and between the time points N+i-l+1 and N+i;
where the symbol ↓2 represents a sub-sampling of each second coefficient in the level j.

**8.** The method according to one of the preceding claims, wherein the length of the data vector is greater than the length of the wavelet function (ψ) in the last level of the predetermined number of levels (L1, L2, L3).

**9.** The method according to one of the preceding claims, wherein the measured signals (ml, m2, m3) refer to vibration parameters and/or water level parameters and/or temperature values.

**10.** The method according to one of the preceding claims wherein the sensors (Sl, S2, S3) are installed for monitoring the same technical system and particularly a dam.

**11.** An apparatus for processing of measurements (ml, m2, m3) from several sensors (Sl, S2, S3), where the measurements from each sensor (Sl, S2, S3) represent a data vector comprising a time series of subsequent measured signals (ml, m2, m3) obtained with a sampling rate (fl, f2, f3) specific for each sensor (Sl, S2, S3), the apparatus including a computing means for performing a method wherein

a) the data vector for each sensor (Sl, S2, S3) is subjected to a discrete wavelet transform (WT) including a wavelet filter (h) and a scaling filter (g) which are based on a scaling function (ϕ) and a wavelet function (ψ), resulting in a number of wavelet coefficients comprising approximation coefficients ( $a_k^1, a_k^2, a_k^3$ ) and detail coefficients ( $d_k^1, d_k^2, d_k^3$ ) for a predetermined number of levels (L1, L2, L3);
b) the wavelet coefficients for each sensor (Sl, S2, S3) are subjected to a thresholding operation (TR), discarding coefficients not fulfilling a threshold criterion, resulting in a reduced number of coefficients;
c) the data vector for each sensor (Sl, S2, S3) is reconstructed by the inverse of the discrete wavelet transform (IWT) using the reduced number of coefficients;
d) the reconstructed data vector for each sensor (Sl, S2, S3) is interpolated using an interpolation function based on the scaling function (ϕ) of the discrete wavelet transform (WT);
e) a new data vector for each sensor (Sl, S2, S3) is determined by sampling the interpolated reconstructed data vector for each sensor at time points which are the same for all sensors (Sl, S2, S3), resulting in a multivariate vector (M) of measured signals of all sensors (Sl, S2, S3) for each sampled time point.

**12.** The apparatus according to claim 11, wherein the computing means is arranged to perform a method according to one of claims 2 to 10.

**13.** A computer program product directly loadable into the internal memory of a digital computer, comprising software code portions for performing the method according to one of claims 1 to 10 when said product is run on a computer.

**14.** A computer program for controlling a computer to perform a method according to one of claims 1 to 10.

FIG 1
S1, f1
S2, f1
S3, f2
PR
m1
m1
m1
m2
m2
m2
m3
m3
m3
m3
M
M
M
Δ1
Δ1
Δ1
Δ1
Δ2
Δ2
Δ3
Δ3

FIG 2

φ, ψ
x(tk)
g
h
↓2
a1k
d1k
L1
a2k
d2k
L2
a3k
d3k
L3

FIG 3
x (tN+i), i=1, 2, 3...
WT
TR
CD
IWT
WI
tk... tm
x (tk... tm)
FIG 4
x (t1... tN)
WT
TR
OWT
B2
B1
x (tN+i), i=1, 2, 3...
TR
CD
IWT
WI
tk... tm
x (tk... tm)

FIG 5

N
N+1
N+2
N+3
N+4
S
L1
L2
L3

Europäisches Patentamt
European Patent Office
Office européen des brevets

# EUROPEAN SEARCH REPORT

Application Number
EP 12 15 1399

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2007/219751 A1 (HUANG JONATHAN [US]) 20 September 2007 (2007-09-20) * paragraphs [0014], [0022], [0023], [0028] claim 6 * | 1-14 | INV. G06F17/14 |
| A | OISEN S ET AL: "Automatic Filtering and Monitoring of Real-Time Reservoir and Production Data", SPE ANNUAL TECHNICAL CONFERENCE AND EXHIBITION, SPE, USA, no. MS-96553, 1 January 2005 (2005-01-01), pages 1-12, XP008154790, DOI: 10.2118/96553-MS ISBN: 978-1-55563-150-5 * page 2 - page 6 * | 1-14 | |
| A,D | Stéphane Mallat: "A Wavelet Tour of Signal Processing, Third Edition: The Sparse Way" In: "A Wavelet Tour of Signal Processing, Third Edition: The Sparse Way", 25 December 2008 (2008-12-25), Academic Press, XP55036881, ISBN: 978-0-12-374370-1 pages 328-328, * page 328 * | 1-14 | TECHNICAL FIELDS SEARCHED (IPC): G06F |
| A,O | Alexander Pyayt ET AL: "Signal processing for earthen dam measurements analysis", 2011 Urban Flood Workshop, 3 November 2011 (2011-11-03), XP55036883, Retrieved from the Internet: URL:http://www.urbanflood.eu/Documents/UF%20WS%202011-11%20Pyayt.pdf [retrieved on 2012-08-31] * page 11 * | 1-14 | |

-/--

The present search report has been drawn up for all claims

| Place of search | Date of completion of the search | Examiner |
|---|---|---|
| Berlin | 18 September 2012 | Huguet Serra, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

2

EPO FORM 1503 03.82 (P04C01)

Europäisches
Patentamt
European
Patent Office
Office européen
des brevets

# EUROPEAN SEARCH REPORT

Application Number
EP 12 15 1399

| Category | Citation of document with indication, where appropriate, of relevant passages | Relevant to claim | CLASSIFICATION OF THE APPLICATION (IPC) |
|---|---|---|---|
| A | Jaume Piera: "Turbulent Patch Identification in Microstructure Profiles: A Method Based on Wavelet Denoising and Thorpe Displacement Analysis", Journal of Athmospheric and Oceanic Technology, vol. 19 1 September 2002 (2002-09-01), pages 1390-1402, XP55030653, Retrieved from the Internet: URL:http://journals.ametsoc.org/doi/pdf/10.1175/1520-0426(2002)019<1390:TPIIMP>2.0.CO;2 [retrieved on 2012-06-21] * sections 2 and 3 * ----- | 1-14 | |
| A | WIM SWELDENS ET AL: "Wavelet sampling techniques", 1993 PROCEEDINGS OF THE STATISTICAL COMPUTING SECTION, AMERICAN STATISTICAL ASSOCIATION, 1 August 1993 (1993-08-01), pages 20-29, XP55037975, * the whole document * ----- | 1-14 | TECHNICAL FIELDS SEARCHED (IPC) |
| A | JIN-SOO GWON ET AL: "Flexibility control of tidal current generation system using wavelet denoising", POWER ELECTRONICS AND ECCE ASIA (ICPE&ECCE), 2011 IEEE 8TH INTERNATIONAL CONFERENCE ON, IEEE, 30 May 2011 (2011-05-30), pages 1350-1357, XP031955993, DOI: 10.1109/ICPE.2011.5944397 ISBN: 978-1-61284-958-4 * sections III and IV * ----- | 1-14 | |

The present search report has been drawn up for all claims

| Place of search | Date of completion of the search | Examiner |
|---|---|---|
| Berlin | 18 September 2012 | Huguet Serra, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..............................................
& : member of the same patent family, corresponding document

2

EPO FORM 1503 03.82 (P04C01)

## ANNEX TO THE EUROPEAN SEARCH REPORT ON EUROPEAN PATENT APPLICATION NO. EP 12 15 1399

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2012

| Patent document cited in search report | Publication date | Patent family member(s) | Publication date |
|---|---|---|---|
| US 2007219751 A1 | 20-09-2007 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **S. MALLAT.** A Wavelet Tour of Signal Processing. Academic Press, 1999
- **PERCIVAL DB ; WALDEN AT.** Wavelet methods for time series analysis. Cambridge University Press, 2000